# NEUE EUROPÄISCHE PATENTSCHRIFT

(11) **EP 0 186 793 B2**
(45) Veröffentlichungstag und Bekanntmachung des Hinweises auf die Entscheidung über den Einspruch: **26.01.1994**
(45) Hinweis auf die Patenterteilung: 14.11.1990
(21) Anmeldenummer: 85115201.7
(22) Anmeldetag: 29.11.1985
(51) Int. Cl.: B23H 11/00

(54) **Funkenerosionsmaschine mit feststehendem Maschinentisch und absenkbarem Arbeitsbehälter für das Dielektrikum**
Electroerosion machine with a fixed machining table and collapsible working tank
Machine d'électro-érosion à table de travail fixe et bac d'usinage escamotable

(30) Priorität: 05.12.1984 DE 3444390
(43) Veröffentlichungstag der Anmeldung: 09.07.1986
(73) Patentinhaber: AG für industrielle Elektronik AGIE Losone bei Locarno, CH-6616 Losone/Locarno (CH)
(72) Erfinder: Lodetti, Attilio, CH-6616 Losone (CH); Blaser, Hansueli, CH-6616 Losone (CH)
(74) Vertreter: Turi, Michael, Dipl.-Phys.

(56) Entgegenhaltungen:
- PATENT ABSTRACTS OF JAPAN, Band 9, Nr. 152 (M-391)[1875], 27. Juni 1985; & JP-A-60 29 209 (MITSUBISHI DENKI K.K.) 14-02-1985

## Beschreibung

Die Erfindung bezieht sich auf eine Funkenerosionsmaschine mit einem feststehenden Maschinentisch und einem darauf angeordneten, aus einem feststehenden und mindestens einem beweglichen Bauteil zusammengefügten Arbeitsbehälter für die dielektrische Flüssigkeit. Das feststehende Bauteil enthält die Maschinentischplatte, die in Wirkstellung mindestens einen Teil des Arbeitsbehälterbodens bildet.

Die gattungsgemässe Maschine ist aus der DE-OS 33 03 758 sowie von konventionellen Funkenerosionsmaschinen her bekannt. Der feststehende Maschinentisch erfüllt bei derartigen Maschinen unter anderem den Zweck, eine hohe Stabilität zu garantieren und damit einhergehend eine hohe Arbeitsgenauigkeit trotz zum Teil erheblicher Kräfte zwischen der Werkzeugelektrode und dem Werkstück zu gewährleisten.

Bei der konventionellen Funkerosionsmaschine ist der die Maschinentischplatte tragende Maschinentisch als eine vom Maschenständer unabhängige und auf dem Maschinensockel freistehende Säule ausgeführt. Das feststehend Bauteil besteht hierbei aus der Maschinentischplatte. Das bewegliche Bauteil besteht aus einem in sich geschlossenen, gekröpften Blechrahmen, welcher die Säule manschettenartig unter Einschluss einer Dichtung umgreift. Das bewegliche Bauteil ist längs der Säule vertikal verfahrbar und bildet in seinem hochgefahrenen Zustand die Seitenwandungen des Arbeitsbehälters zur Aufnahme einer dielektrischen Flüssigkeit. Diese konventionelle Maschine hat die Nachteile eines langen Kraftflussweges, einer relativ kleinen Verbindungsfläche zwischen Maschinenständer und Maschinentisch und des notwendigen Einsatzes dynamischer Dichtungen zwischen dem beweglichen Bauteil und dem dieses führenden Maschinentisches. Da die Maschinentischplatte gewöhnlich den Maschinentisch überkragt, muss beim Auswechseln der dynamischen Dichtung zunächst die Tischplatte demontiert werden. Dies erfordert vor einer erneuten Bearbeitung von Werkstücken ein erneutes Justieren der Maschinentischplatte, um genau arbeiten zu können. Sämtliche vorgenannten Nachteile beeinträchtigen im Ergebnis die Arbeitsgenauigkeit.

Die aus der DE-OS 33 03 758 bekannte gattungsgemäße Funkenerosionsmaschine löst die vorstehend genannten Nachteile der konventionellen Funkenerosionsmaschine dadurch, daß die vordere Wand des vertikalen Maschinenständers gleichzeitig die stationäre Rückwand des Arbeitsbehälters bildet und nur die übrigen Wandabschnitte des Arbeitsbehälters vertikal verschiebbar sind. Hierdurch wird eine freie Zugänglichkeit zum Maschinentisch gewährleistet, was Automatisierungsbestrebungen entgegenkommt. Gleichzeitig gewährleistet diese Funkenerosionsmaschine eine hohe Maschinensteifigkeit. Im übrigen sind bei der aus der DE-OS 33 03 758 bekannten Funkenerosionsmaschine bevorzugt die beweglichen Wandabschnitte des Arbeitsbehälters zu einer Einheit zusammengefaßt und lassen sich vorzugsweise stufenlos in verschiedenen Höheneinstellungen arretieren. Darüber hinaus lassen sich die beweglichen Wandabschnitte des Arbeitsbehälters bis unter die Maschinentischplatte absenken. Als bevorzugte Dichtungselemente werden bei dieser Funkenerosionsmaschine Blähdichtungen verwendet, d.h. Dichtungen, die beispielsweise aus einem aufpumpbaren Schlauch bestehen.

Aus der deutschen Patentschrift 25 14 899 (Bock) ist ebenfalls eine Funkenerosionsmaschine mit einem absenkbaren Dielektrikum-Arbeitsbehälter bekannt. Der Arbeitsbehälter setz sich hierbei aus einem vertikal verfahrbaren Behälterteil, der die Form des vollständigen Arbeitsbehälters, jedoch ohne dessen Rückwand hat, und einer rückwärtigen Führungsplatte zusammen. Die aneinander grenzenden Flächen des offenen Behälterteils und der Führungsplatte sind mit dynamisch arbeitenden Dichtungen bestückt. Der Boden des Arbeitsbehälters untergreift einen an der Führungsplatte befestigten und in den Arbeitsbehälter hineinragenden Maschinentisch. Im übrigen ist-wie bei der erstgenannten konventionellen gattungsgemässen Funkenerosionsmaschine-das beweglich Arbeitsteil bis unter die Oberkante der Maschinentischplatte absenkbar, was volle Zugänglichkeit zu Werkstück und Werkzeug ermöglicht. Auch diese Funkenerosionsmaschine hat eine hohen Genauigkeitsanforderungen nicht genügende Stabilität. Denn die Maschinentischplatte bzw. der Maschinentisch ist mittels einer rückwärtigen Konsole an der Führungsplatte befestigt. Die Führungsplatte ihrerseits ist über Horizontal- und Vertikalschlitten mit dem Maschinenständer verbunden, so dass bei dieser Funkenerosionsmaschine nicht von einem feststehenden Maschinentisch gesprochen werden kann.

Im übrigen sind Funkenerosionsmaschinen mit bewegbarem Maschinentisch und einem darauf angeordneten, bewegbare Teile aufweiseneden Arbeitsbehälter aus der deutschen Patentschrift 15 65 371 (AEG), der deutschen Offenlegungsschrift 22 57 138 (Société Genevoise d'Instruments de Physique) und der US Patentschrift 3 542 993 (Buck) bekannt.

Die Erfindung befasst sich mit der Aufgabe, die eingangs genannte gattungsgemässe Funkenerosionsmaschine unter weitestgehender Beibehaltung ihrer bisherigen Vorteile zu verbessern, insbesondere deren Arbeitsgenauigkeit zu erhöhen.

Diese Aufgabe wird dadurch gelöst, dass bei der gattungsgemässen Funkenerosionsmaschine das feststehende Bauteil zusätzlich ein Wandelement aufweist, welches im wesentlichen die dem Maschinenständer zugekehrte Wand (Rückwand) des Arbeitsbehälter bildet.

Die Ausbildungs einer dem Maschinenständer zugekehrten, d.h. unmittelbar gegenüberliegenden feststehenden Rückwand beeinträchtigt die volle Zugänglichkeit zu Werkstück und Werkzeug nicht. Hinzu kommt, dass die Notwendigkeit eines Spaltes zwischen dem Maschinentisch und dem Maschinenständer für die vertikale Verschiebbarkeit eine Arbeitsbehälterwand-wie bei der eingangs genannten konventionellen Funkenerosisionsmaschine-hier entfällt. Der Maschinentisch kann also-wie bei der Funkenerosionsmaschine gemäß der DE-OS 33 03 758-unmittelbar mit dem Maschinenständer verbunden sein. Hierdurch ergibt sich die Möglichkeit einer grossflächigen Verbindung zwischen dem Maschinentisch und dem Maschinenständer. Ist auch der obere Teil des Maschinentisches mit dem Maschinenständer verbunden, wird ein kurzer, in sich geschlossener Kraftschlussweg ermöglicht. Insgesamt kann hierdurch eine hohe Stabilität der Funkenerosionsmaschine, eine wesentliche Voraussetzung für eine hohe Arbeitsgenauigkeit, erzielt werden. Bei der erfindungsgemäßen Funkenerosionsmaschine kommt noch die Möglichkeit einer thermischen Isolierung zwischen dem feststehenden zusätzlichen Wandelement (Rückwand des Arbeitsbehälters) und dem Maschinenständer hinzu. Hierdurch lassen sich Wärmespannungen und damit Arbeitsungenauigkeiten zumindest stark reduzieren.

Bevorzugt ist das feststehende Bauteil einstükkig ausgeformt. Bei einem im wesentlichen quaderförmigen Arbeitsbehälter hat es im wesentlichen die Form zweier rechtwinklig aneinandergrenzenden Flächen.

Die Zusammenfassung sämtliche beweglicher Bauteile zu einem einstückigen Bauteil gemäss einem weiteren bevorzugten Ausführungsbeispiel hat den Vorteil einer Minimierung von Dichtungsproblemen auf wenige Flächen; zusätzlich den Vorteil eines vergleichsweise stabilen Arbeitsbehälters. Die Stabilität des Arbeitsbehälters wird dadurch weiter erhöht, dass sich an die als bewegliche Seitenwandungen des Arbeitsbehälters dienenden Wandelemente Flächenelemente anschliessen, die als Teile des Arbeitsbehälterbodens und der Arbeitsbehälterrückwand diesen und im zusammengesetzten Zustand des Arbeitsbehälters an das feststehende Bauteil angrenzen. In Weiterbildung des vorstehenden technischen Konzeptes ist das bewegliche Bauteil längs Führungen vertikal verfahrbar angeordnet. Vorzugsweise sind hierbei die Führungen zu beiden Seiten des Maschinentisches am Maschinenständer befestigt. Auch hierdurch wird die Gesamtstabilität der Funkenerosionsmaschine erhöht und können das Werkstück und die Werkzeugelektrode rasch frei zugänglich gemacht werden.

In Weiterbildung der erfindungsgemässenen Maschine enthält die feststehende Rückwand des feststehenden Bauteils an den entsprechenden Stellen, vorzugsweise mittig oben und unten, jeweils eine Auslassöffnung für die Rauschgasabsaugung und für den Ablauf der dielektrischen Flüssigkeit. Diese Öffnungen können mit korrespondierenden Rohrleitungen im Bett des Maschinenständers fest verbunden sein, was beim Stand der Technik kaum möglich ist.

Gemäss einer weiteren bevorzugten Ausbildung der erfindungsgemässen Funkenerosionsmaschine ist das als Rückwand des Arbeitsbehälters dienende Wandelement des feststehenden Bauteils als Gehäuseblock zur Aufnahme aller zum Betrieb des Arbeitsbehälters erforderlichen Versorgungs- und Entsorgungseinrichtungen (Spülort, Spülart, Spülmenge, Temperatur, Niveau, Füllen, Entleeren, etc.) ausgestaltet. Wärmespannungen und damit Arbeitsungenauigkeiten lassen sich damit vermeiden, zumindest aber stark reduzieren, dass der Gehäuseblock von der Vorderwand des Maschinenständers räumlich getrennt ist. Ein Überkragen der Maschinentischplatte über die freien Flächen des Maschinentisches reduziert die Verschumutzungsgefahr an den Zentrier- und Spannelementenen in der Bestimmungsebene des Maschinentisches durch aufgeschwemmtes, erodiertes Material. Dies erlaubt den Einsatz hochwertiger, hochgenauer Bauelemente, wie hydromechanische Spannzangen usw.

Die Erfindung gestattet es auch, den Maschinenständer und den Maschinentisch aus einem gemeinsamen Gehäuserahmen aus Polymerbeton, dessen Hohlräume zur Stabilisierung mit Kernen aus einem leichten Füllstoff, z.B. Polystyrol oder Polyurethan, ausgefüllt sind, aufzubauen. Diese Massnahme trägt erheblich zur Erhöhung der Stabilität der Maschine bei.

Nachfolgend wird die Erfindung anhand von Ausführungsbeispielen unter Bezugsnahme auf die beigefügte schematische Zeichnung noch näher erläutert. In der Zeichnung zeigen:

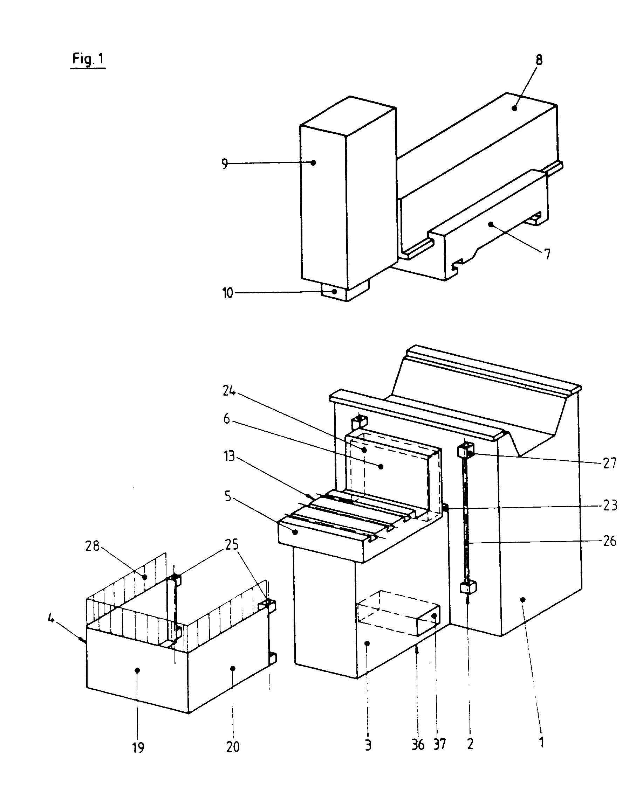

Fig. 1 eine perspektivische Darstellung eines ersten Ausführungsbeispiels, zum Teil in Funktionsgruppen zerlegt;
Fig. 2a und 2b Ausführungsbeispiele der für die Bildung eines Arbeitsbehälters erforderlichen Baugruppen;
Fig. 3 wesentliche Baugruppen eines weiteren Ausführungsbeispiels in Vorder- und Seitenansicht, wobei das bewegliche Bauteil einmal in Eingriffsstellung mit dem feststehenden Bauteil und einmal von diesem vollkommen abgesenkt dargestellt ist;
Fig. 3a bis 3d unterschiedliche Befestigungsmöglichkeiten eines Dichtungsprofils zwischen dem feststehenden und dem beweglichen Bauteil;
Fig. 4 einen Vertikalschnitt durch den Maschinenständen, den Maschinentisch und den Arbeitsbehälter eines weiteren Ausführungsbeispiels mit im Maschinenständer angeordneten Versorgungs- und Entsorgungsleitungen für den Arbeitsbehälter und
Fig. 5 ein weiteres Ausführungsbeispiel einer Führung und eines Antriebes für das bewegliche Bauteil.

Die in der Zeichnung dargestellten Ausführungsbeispiele weisen einen Maschinenständer 1 auf, der einen in einem Bett längs verschiebbaren Zwischenschlitten 7 trägt. Dieser nimmt einen quer verschiebbaren Querträger 8 auf, an dessen Vorderseite der Maschinenkopf 9 mit einer ein- und ausfahrbaren Pinole 10 sitzt. An der Vorderseite des Maschinenständers 1 ist ein Maschinentisch 3 ausgebildet.

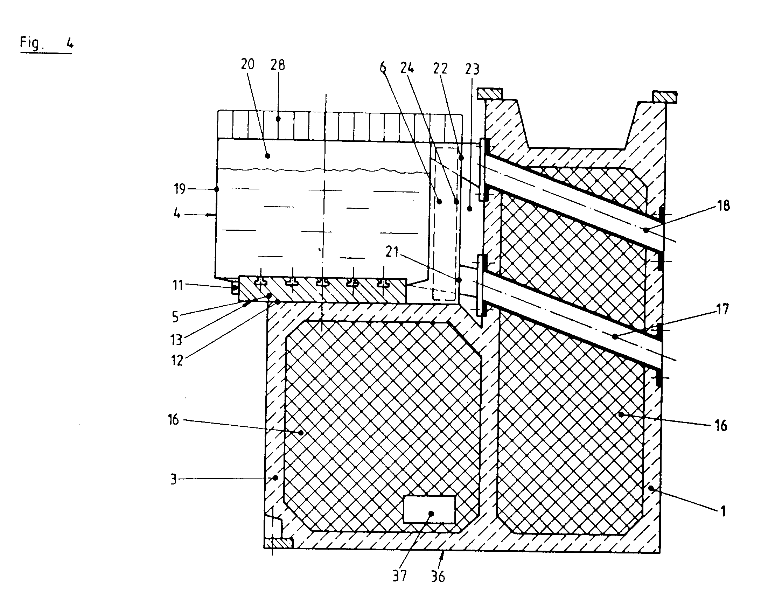

Gemäss dem in Fig. 4 dargestellten Ausführungsbeispiel weisen der Maschinenständer 1 und der Maschinentisch 3 einen gemeinsamen Gehäuserahmen 36 aus Polymerbeton auf, dessen Hohlräume mit Kernen 16 aus Polyurethan ausgefüllt sind. Hierdurch wird ein hohes Mass an Stabilität erreicht. Mittig durch den Maschinenständer 1 sind Rohrleitungen 17, 18 für den Flüssigkeitsablauf aus dem Arbeitsbehälter und die Rauchgasabsaugung geführt. Diese Rohrleitungen erbringen eine zusätzliche Versteifung des Maschinenständers 1 und eine bessere Kernhaltung bei günstiger symmetrischer Wärmeausdehnung.

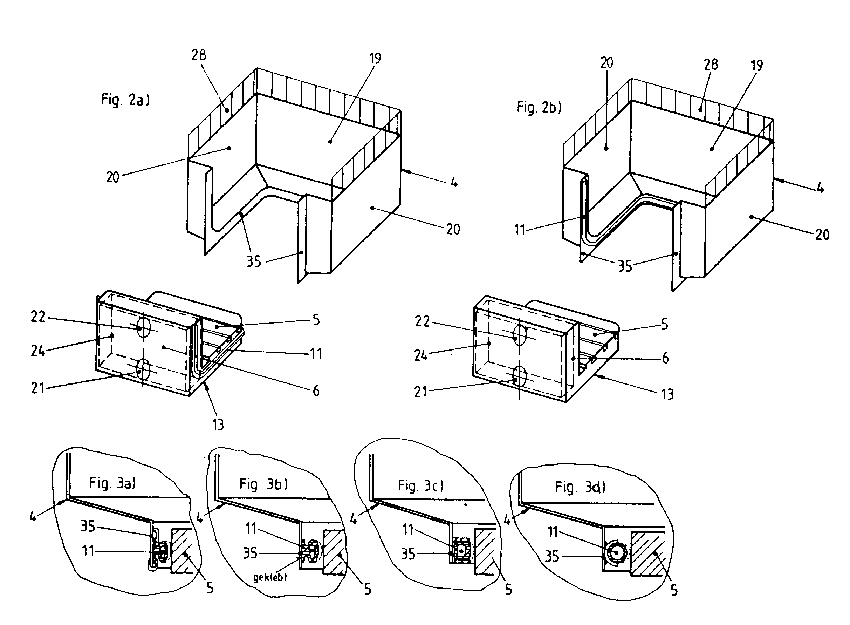

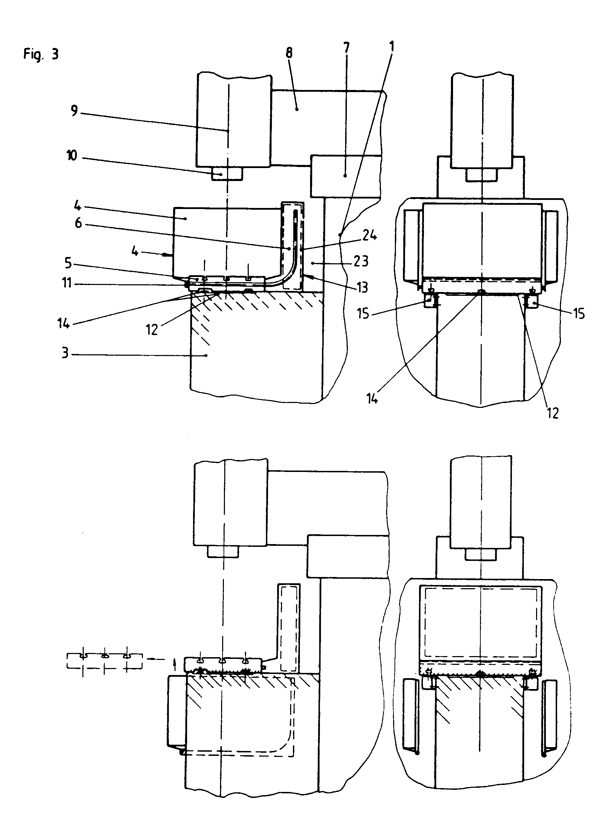

Auf dem Maschinentisch 3 sitzt fest montiert und diesen an seiner freien Flächen Überkragend ein einstückiges, im Vertikalschnitt L-förmiges (feststehendes) Bauteil 13. Das Bauteil 13 besteht im wesentlichen aus einer horizontalen Tischplatte, der Maschinentischplatte 5, und einem rückseitig vertikal angeordneten, dem Maschinenständer 1 unmittelbar benachbarten Wandelement. Die Maschinentischplatte 5 dient im wesentlichen als Boden und das vertikale Wandelement im wesentlichen als Rückwand 6 eines noch zu beschreibenden Arbeitsbehälters zur Aufnahme der dielektrischen Flüssigkeit. die Maschinentischplatte 5 ist mit ihrer unteren Fläche in der Bestimmungsebene 12 (Fig. 3 und 4) mittels Zentrierelementen 14 und Spannelementen 15 am Maschinentisch 3 fixiert. Zwischen dem Maschinenständer 1 und dem Rückwandelement 6 des L-oder winkelförmigen feststehenden Bauteils 13 ist ein Abstand 23 vorgesehen, dessen Luftpolster zur Wärmeisolation gegenüber dem Maschinenständer 1 dient.

Die dargestellten Ausführungsbeispiele zeigen einem im wesentlichen quaderförmigen Arbeitsbehälter, der aus dem winkelförmigen feststehenden Bauteil 13 und einem komplementären beweglichen Bauteil 4 zusammenfügbar ist. Das bewegliche Bauteil 4 hat einen im wesentlichen C-förmigen Querschnitt und umfasst die Vorderwand 19 und die beiden Seitenwände 20 des vollständigen Arbeitsbehälters. Das bewegliche Bauteile 4 ist längs Führungen 2 vertikal verfahrbar. In hochgefahrenem Zustand gelangt es in abdichtenden Eingriff mit dem feststehenden Bauteil 13, so dass hierdurch der Arbeitsbehälter für die dielektrische Flüssigkeit entsteht.

Zur Abdichtung des Grenzflächenbereiches zwischen dem feststehenden und dem beweglichen Bauteil dient eine statisch arbeitende Dichtung 11, die durch ein Fluid betätigbar, z.B. durch Luft aufblasbar, oder ein Dichtungsprofil aus Elastomer sein kann. Sie ist entweder an einem Vertikalflansch 35 von (sich an die Vorder- und Seitenwände 19, 20 anschliessenden) Boden- und Rückwandteilen des beweglichen Bauteils 4 (Fig. 2b; 3a bis 3d) oder aber an den korrespondierenden Seitenflächen des feststehenden Bauteils 13 (Fig. 2a) durch Kleben, Klammern, Eindrücken in Profilhalter usw. angebracht.

Das als Behälterrückwand 6 dienende Element des feststehendeb Bauteils 13 ist zu einem Gehäuseblock 24 zur Aufnahme aller für den Betrieb des Arbeitsbehälters erforderlichen Versorgungs- und Entsorgungseinrichtungen ausgebildet. Mittig durch den Gehäuseblock 24 ist an dessen Oberseite eine Auslassöffnung 22 für die Rauchgasabsaugung und an ihrer Unterseite eine Auslassöffnung 21 für den Ablauf bzw. die Zufuhr der dielektrischen Flüssigkeit geführt. Diese Auslassöffnungen sind mit den bereits beschriebenen korrespondierenden Rohrleitungen 17 und 18 im Bett des Maschinenständers 1 fest verbunden, z.B. angeflanscht.

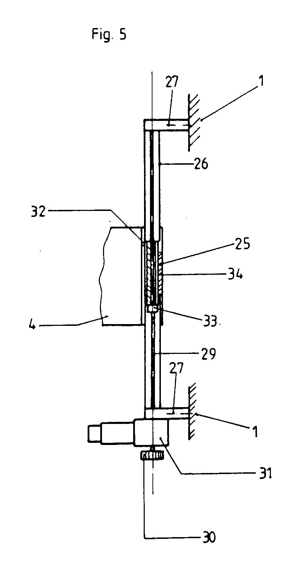

Das höhenverschiebbare bewegliche Bauteil 4 trägt kopfseitig einen umlaufenden Berührungsschutz 28 und wird an seinen rückwärtigen Enden seiner Seitenwände 20 durch jeweils zwei an den vertikalen Führungen 2 gleitenden Büchsten 25 gehalten. Die Führungen 2 sind als Führungsrohre 26 ausgebildet und symmetrisch zum Maschinentisch 3 so auf der Vorderseite des Maschinenständers 1 befestigt, dass die Oberkante des Berührungsschutzes 28 bei abgesenktem C-förmigen Rahmen sich noch unterhalb der Oberkante der Maschinentischplatte 5 befindet. Ein Abstand zwischen dem Maschinenständer 1 und den Führungsrohren 26 wird über Distanzstück 27 gewährleistet. Zum Verfahren des C-rahmenförmigen beweglichen Bauteils 4 können für eine Längsbewegung bekannte Antriebssysteme eingesetzt werden, beispielsweise Gewindespindeln 29, Endlos-Zugmittel (Seil, Kette, Riemen usw.), pneumatische oder hydraulische Hubzylinder, Linearantriebe usw. eingesetzt werden. Das in Fig. 5 dargestellte Ausführungsbeispiel veranschaulicht eine Kombination von Führung und Antrieb. Die beiden Führungsrohre 26 sind hierbei mit Längsschlitzen versehen und besitzen jeweils eine in ihrem Inneren drehbar gelagerte und von aussen antreibbare Gewindespindel 29. Diese steht in Eingriff mit einer entsprechenden Hubmutter 33, die ihrerseits unterhalb eines im Inneren des Führungsrohrs 26 laufenden Kolbens 34 mit Kunststoffgleitführung 32 sitzt. Der Kolben 34 ist über den Längsschlitz mit den an den Aussenwandungen der Führungsrohre 26 entlanggleitenden Büchsen 25 schraubbar verbunden. Der einen Gewindespindel 29 ist fussseitig ein Getriebebremsmotor 31 zugeordnet. Zur Synchronisation beider Gewindespindeln 29 dient ein über einen durch eine Öffnung 37 am Maschinentisch 3 laufender Zahnriemen 30.

Stattdessen können die Büchsen über ein Innengewinde in unmittelbarem Eingriff mit den Gewindespindeln 29 stehen und längs den Innenwandungen der Führungsrohre 26 entlanggleiten. Am beweglichen Bauteil 4 sind sie über Verbindungsglieder befestigt, die aus den Längsschlitzen der Führungsrohre 26 herausragen. Bei dieser Ausführungsform ist also die Büchse zusätzlich als Hubmutter ausgebildet.

## Patentansprüche

1. Funkenerosionsmaschine mit
a) einem feststehenden Maschinentisch (3) und
b) einem darauf angeordneten, aus einem feststehenden (13) und mindestens einem beweglichen (4) Bauteil zusammengefügten Arbeitsbehälter für die dielektrische Flüssigkeit, wobei
b.1) das feststehende Bauteil (13) die - zumindest einen Teil des Arbeitsbehälterbodens bildende - Maschinentischplatte (5) enthält,
dadurch gekennzeichnet, daß
b.2) das feststehende Bauteil (13) zusätzlich ein Wandelement aufweist, welches thermisch isoliert im Abstand (23) von der Vorderwand des Maschinenständers (1) angeordnet ist und im wesentlichen die dem Maschinenständer (1) zugekehrte Wand (Rückwand 6) des Arbeitsbehälters bildet.

2. Funkenerosionsmaschine nach Anspruch 1, dadurch gekennzeichnet, dass sämtliche beweglichen Bauteile, zu einem einstückigen Bauteil (4) zusammengefasst sind.

3. Funkenerosionsmaschine nach Anspruch 2, dadurch gekennzeichnet, dass das bewegliche Bauteil (4) als Arbeitsbehälterboden- und -rückwandabschnitte dienende, an das feststehende Bauteil (13) angrenzende Abschnitte aufweist.

4. Funkenerosionsmaschine nach Anspruch 2 oder 3, dadurch gekennzeichnet, dass das bewegliche Bauteil (4) längs Führungen (2) vertikal verfahrbar angeordnet ist.

5. Funkenerosionsmaschine nach Anspruch 4, dadurch gekennzeichnet, dass die Führungen (2) zu beiden Seiten des Maschinentisches (3) am Maschinenständer (1) befestigt sind.

6. Funkenerosionsmaschine nach Anspruch 4 oder 5, dadurch gekennzeichnet, dass die Oberkante des beweglichen Bauteils (4) wenigstens bis zur Oberkante der Maschinentischplatte (5) absenkbar ist.

7. Funkenerosionsmaschine nach wenigstens einem der Ansprüche 4 bis 6, dadurch gekennzeichnet, dass zum vertikalen Verfahren des beweglichen Bauteils (4) wenigstens eine Gewindespindel (29), ein Endlos- Zugmittel, ein pneumatischer oder hydraulischer Zylinder oder ein Linearantrieb dient.

8. Funkenerosionsmaschine nach den Ansprüchen 5 und 7, dadurch gekennzeichnet, dass
a) die Führungen (2) mit einem vertikalen Längsschlitz versehene Rohre (26) aufweisen, in deren Innerem jeweils eine drehbar gelagerte und von aussen antreibbare Gewindespindel (29) angeordnet ist und
b) die mit den Führungen (2) zusammenwirkenden Elemente des beweglichen Bauteils (4) an den Innenwandungen der Führungsrohre (26) entlang gleitende Büchsen sind,
c) die jeweils ein Innengewinde für einen Eingriff mit der Gewindespindel (29) aufweisen und über ein aus dem Längsschlitz herausragendes Verbindungsglied mit dem beweglichen Bauteil (4) verbunden sind.

9. Funkenerosionsmaschine nach den Ansprüchen 5 und 7, dadurch gekennzeichnet, dass
a) die Führungen (2) mit einem vertikalen Längsschlitz versehene Führungsrohre (26) aufweisen, in deren Innerem jeweils eine drehbar gelagerte, von aussen antreibbare und mit einer Hubmutter (33) in Eingriff stehende Gewindespindel (29) angeordnet ist,
b) wobei die Hubmutter (33) unterhalb eines im Rohrinneren laufenden und mit Kunststoffgleitführungen (32) bestückten Kolbens (34) sitzt, und
c) der Kolben (34) mit an den Aussenwandungen der Führungsrohre (26) entlang gleitenden und am beweglichen Bauteil (4) befestigten Büchsen (25) über den Längsschlitz in Verbindung steht.

10. Funkenerosionsmaschine nach Anspruch 8 oder 9, dadurch gekennzeichnet, dass die beiden Gewindespindeln (29) über einen durch eine Öffnung (37) im Maschinentisch (3) laufenden endlosen Zahnriemen (30) verbunden sind und einer Gewindelspindel (29) fussseitig ein Getriebebremsmotor (31) zugeordnet ist.

11. Funkenerosionsmaschine nach wenigstens einem der vorstehenden Ansprüche, dadurch gekennzeichnet, dass die zur gegenzeitigen Anlage vorgesehenen Flächen (35) des feststehenden und/oder des beweglichen Bauteils (13, 4) mit einer Dichtung (11) bestückt sind.

12. Funkenerosionsmaschine nach Anspruch 11, dadurch gekennzeichnet, dass die Dichtung (11) angeklebt, angeklammert oder in entsprechende Profilhalter eingedrückt ist.

13. Funkenerosionsmaschine nach Anspruch 11 oder 12, dadurch gekennzeichnet, dass die Dichtung (11) eine statisch arbeitende Dichtung ist, die aus einem profilierten Elastomer oder einem aufpumpbaren Schlauch besteht.

14. Funkenerosionsmaschine nach wenigstens einem der vorstehenden Ansprüche, dadurch gekennzeichnet, dass das Rückwandelement (6) des feststehenden Bauteils (13) in seinem oberen Bereich eine Auslassöffnung (22) für die Rauchgasabsaugung und in seinem unteren Bereich eine Auslassöffnung (21) für den Ablauf der dielektrischen Flüssigkeit hat und die Auslassöffnungen (21, 22) mit korrespondierenden Rohrleitungen (17, 18) im Maschinenständer (1) fest verbunden sind.

15. Funkenerosionsmaschine nach wenigstens einem der vorstehenden Ansprüche, dadurch gekennzeichnet, dass das Rückwandelement (6) aus Gehäuseblock (24) zur Aufnahme aller betriebsmässig erforderlichen Versorgungs- und Entsorgungseinrichtungen für den Arbeitsbehälter ausgebildet ist.

16. Funkenerosionsmaschine nach wenigstens einem der vorstehenden Ansprüche, dadurch gekennzeichnet, dass zwischen der Vorderwand des Maschinenständers (1) und dem Rückwandelement (6) ein geringer Abstand (23) besteht.

17. Funkenerosionsmaschine nach wenigstens einem der vorstehenden Ansprüche, dadurch gekennzeichnet, dass das feststehende Bauelement (13) mit seiner Grundfläche (Maschinentischplatte 5) nach vorn und seitlich über den Maschinentisch (3) hinausragt.

18. Funkenerosionsmaschine nach wenigstens einem der vorstehenden Ansprüche, dadurch gekennzeichnet, dass das bewegliche Bauteil (4) kopfseitig einen umlaufenden Berührungsschutz (28) aufweist.

19. Funkenerosionsmaschine nach wenigstens einem der vorstehenden Ansprüche, dadurch gekennzeichnet, dass der Maschinenständer (1) und der Maschinentisch (3) aus einem gemeinsamen Gehäuserahmen (36) aus Polymerbeton und Kernen (16) aus einem leichten Füllstoff (z.B. Polystyrol, Polyurethan) in dessen Hohlräumen aufgebaut sind.

## Claims

1. A spark erosion machine having
a) a stationary machine table (3) and
b) a working container, for the dielectric liquid, joined together from one stationary (13) and at least one mobile (4) component, arranged on said machine table (3), wherein
b.1) the stationary component (13) contains the machine table plate (5) which forms at least a part of the working container base,
characterised in that
b.2) the stationary component (13) has in addition a wall element which is arranged thermally isolated with spacing (23) from the front wall of the machine stand (1) and which forms substantially the wall (rear wall 6) of the working container facing the machine stand (1).

2. A spark erosion machine according to claim 1, characterised in that all mobile components, are joined to form a one piece component (4).

3. A spark erosion machine according to claim 2, characterised in that the mobile component (4) has sections adjacent to the stationary component (13) serving as working container base and rear wall sections.

4. A spark erosion machine according to claim 2 or 3, characterised in that the mobile component (4) is arranged along guides (2) in a vertically transportable manner.

5. A spark erosion machine according to claim 4, characterised in that the guides (2) are secured at both sides of the machine table (3) to the machine stand (1).

6. A spark erosion machine according to claim 4 or 5, characterised in that the upper edge of the mobile component (4) is able to be lowered at least to the upper edge of the machine table plate (5).

7. A spark erosion machine according to at least one of claims 4 to 6, characterised in that at least one threaded spindle (29), continuous drawing means, a pneumatic or hydraulic cylinder or a linear drive serves for vertical conveyance of the mobile component (4).

8. A spark erosion machine according to claims 5 and 7, characterised in that
a) the guides (2) have tubes (26) provided with a vertical longitudinal slit, in the inside of which is arranged in each case a pivoted threaded spindle (29) able to be driven from outside and
b) the elements of the mobile component (4) cooperating with the guides (2) are bushes slidable along the inner walls of the guide tubes (26),
c) which bushes have in each case an internal thread for engagement with the threaded spindle (29) and, by way of a connecting member projecting from the longitudinal slit, are connected to the mobile component (4).

9. A spark erosion machine according to claims 5 and 7, characterised in that
a) the guides (2) have guide tubes (26) provided with a vertical longitudinal slit, in the interior of which guide tubes is arranged in each case a pivoted threaded spindle (29), able to be driven from the outside and engaged with a lifting nut (33),
b) wherein the lifting nut (33) sits below a piston (34) equipped with plastic sliding guides (32) and running in the interior of the tube,
c) and the piston (34) is connected to bushes (25), along the longitudinal slit, slidable along the outer walls of the guide tubes (26) and secured to the mobile component (4).

10. A spark erosion machine according to claim 8 or 9, characterised in that both threaded spindles (29) are connected by way of a continuous toothed belt (30) running through an opening (37) in the machine table (3), and a transmission brake motor (31) is allocated to a threaded spindle (29) on the base side.

11. A spark erosion machine according to at least one of the preceding claims, characterised in that the surfaces (35) provided for mutual bearing of the stationary and/or of the mobile component (13,4) are equipped with a seal (11).

12. A spark erosion machine according to claim 11, characterised in that the seal (11) is stuck, braced or pressed into corresponding profile holders.

13. A spark erosion machine according to claim 11 or 12, characterised in that the seal (11) is a statically functioning seal, which consists of a profiled elastomer or an inflatable tube.

14. A spark erosion machine according to at least one of the preceding claims, characterised in that the rear wall element (6) of the stationary component (13) has in its upper region an outlet opening (22) for the waste gas extraction and in its lower region an outlet opening (21) for the outlet of the dielectric liquid, and the outlet openings (21,22) are connected firmly to corresponding ducts (17, 18) in the machine stand (1).

15. A spark erosion machine according to at least one of the preceding claims, characterised in that the rear wall element (6) is constructed as a housing block (24) for accepting all supply and discharge devices required operationally for the working container.

16. A spark erosion machine according to at least one of the preceding claims, characterised in that between the front wall of the machine stand (1) and the rear wall element (6) there is a small space (23).

17. A spark erosion machine according to at least one of the preceding claims, characterised in that the stationary component (13) projects with its base surface (machine table plate 5) forwards and laterally over the machine table (3).

18. A spark erosion machine according to one of the preceding claims, characterised in that the mobile component (4) has on the top side a rotating contact safety device (28).

19. A spark erosion machine according to one of the preceding claims, characterised in that the machine stand (1) and the machine table (3) are constructed from a common housing frame (36) of polymer concrete and grains (16) of a light filler (e.g. polystyrene, polyurethane) in its cavities.

## Revendications

1. Machine d'électroérosion comprenant
a) une table de travail (3) fixe et
b) un bac d'usinage pour le liquide diélectrique, qui est disposé sur la table et est formé de l'assemblage d'un composant fixe (13) et d'au moins un composant mobile (4),
b.1) le composant fixe (13) contenant le plateau (5) de la table de travail, plateau qui constitue au moins une partie du fond du bac d'usinage,
caractérisée en ce que
b.2) le composant fixe (13) présente en outre un élément de paroi qui est disposé, en étant isolé thermiquement, à distance (23) de la paroi avant du montant (1) de la machine et forme essentiellement la paroi (paroi arrière 6) du bac d'usinage dirigée vers ce montant (1).

2. Machine d'électroérosion selon la revendication 1, caractérisée en ce que toutes les parties mobiles sont réunies en un composant (4) d'un seul tenant.

3. Machine d'électroérosion selon la revendication 2, caractérisée en ce que le composant mobile (4) comporte des sections voisines du composant fixe (13), qui servent de sections du fond et de la paroi arrière du bac d'usinage.

4. Machine d'électroérosion selon la revendication 2 ou 3, caractérisée en ce que le composant mobile (4) est disposé de manière qu'il puisse être déplacé verticalement le long de glissières (2).

5. Machine d'électroérosion selon la revendication 4, caractérisée en ce que les glissières (2) sont fixées au montant (1) de la machine, des deux côtés de la table de travail (3).

6. Machine d'électroérosion selon la revendication 4 ou 5, caractérisée en ce que le bord supérieur du composant mobile (4) est abaissable au moins jusqu'au côté supérieur du plateau (5) de la table de travail.

7. Machine d'électroérosion selon au moins une des revendications 4 à 6, caractérisée en ce que le déplacement vertical du composant mobile (4) est produit par au moins une tige filetée (29), un organe de traction sans fin, un vérin pneumatique ou hydraulique ou un moteur linéaire.

8. Machine d'électroérosion selon les revendications 5 et 7, caractérisée en ce que
a) les glissières (2) comprennent des tubes (26) pourvus d'une fente longitudinale verticale et à l'intérieur de chacun desquels est disposée une tige filetée (29) montée rotative et commandée de l'extérieur et
b) les éléments du composant mobile (4) coopérant avec les glissières (2) sont des douilles glissant le long des parois internes des tubes guides (26),
c) douilles qui présent chacune un filetage intérieur pour la prise avec la tige filetée (29) et sont reliées au composant mobile (4) par un élément de liaison dépassant à l'extérieur à travers la fente longitudinale.

9. Machine d'électroérosion selon les revendications 5 et 7, caractérisée en ce que
a) les glissières (2) comprennent des tubes guides (26) pourvus d'une fente longitudinale verticale et à l'intérieur de chacun desquels est disposée une tige filetée (29) montée rotative, commandée de l'extérieur et en prise avec un écrou de montée/ abaissement (33),
b) l'écrou de montée/abaissement (33) étant fixé sous un piston (34) disposé mobile à l'intérieur du tube et pourvu de garnitures antifriction (32) en matière synthétique, et
c) le piston (34) étant en liaison, à travers la fente longitudinale, avec des douilles (25) fixées au composant mobile (4) et glissant le long des parois externes des tubes guides (26).

10. Machine d'électroérosion selon la revendication 8 ou 9, caractérisée en ce que les deux tiges filetées (29) sont accouplées par une courroie crantée (30) sans fin, circulant à travers une ouverture (37) pratiquée dans la table de travail (3), et qu'un moteur-réducteur-frein (31) attaque l'extrémité inférieure d'une tige filetée (29).

11. Machine d'électroérosion selon au moins une des revendications précédentes, caractérisée en ce que les surfaces (35) du composant fixe et/ou du composant mobile (13, 4) destinées à s'appliquer les unes contre les autres, sont garnies d'un joint d'étanchéité (11).

12. Machine selon la revendication 11, caractérisée en ce que le joint d'étanchéité (11) est fixé par collage, agrafage ou enfoncement dans des supports profilés adéquats.

13. Machine d'électroérosion selon la revendication 11 ou 12, caractérisée en ce que le joint d'étanchéité (11) est de type statique et est formé d'un élastomère profilé ou d'un tuyau gonflable.

14. Machine d'électroérosion selon au moins une des revendications précédentes, caractérisée en ce que l'élément de paroi arrière (6) du composant fixe (13) présente un orifice de sortie (22) pour l'aspiration des fumées dans sa partie supérieure et un orifice de sortie (21) pour l'écoulement du liquide diélectrique dans sa partie inférieure et ces orifices de sortie (21, 22) sont raccordés de façon fixe à des canalisations (17, 18) correspondantes dans le montant (1) de la machine.

15. Machine d'électroérosion selon au moins une des revendications précédentes, caractérisée en ce que l'élément de paroi arrière (6) est réalisé comme un bloc de servitude (24) pour la réception de tous les dispositifs d'alimentation et d'évacuation nécessaires au fonctionnement du bac d'usinage.

16. Machine d'électroérosion selon au moins une des revendications précédentes, caractérisée en ce qu'une faible distance (23) est prévue entre la paroi avant du montant (1) de la machine et l'élément de paroi arrière (6).

17. Machine d'électroérosion selon au moins une des revendications précédentes, caractérisée en ce que le composant fixe (13) déborde par sa surface de base (plateau 5) de la table de travail) vers l'avant et latéralement de la table de travail (3).

18. Machine d'électroérosion selon au moins une des revendications précédentes, caractérisée en ce que le haut du composant mobile (4) présente une protection périphérique (28) contre les contacts accidentels.

19. Machine d'électroérosion selon au moins une des revendications précédentes, caractérisée en ce que le montant (1) de la machine et la table de travail (3) sont réalisés d'une ossature (36) commune en béton au polymère et de noyaux (16) d'un matériau de remplissage léger (tel que polystyrène ou polyuréthanne) disposés dans les espaces vides de l'ossature.
